# EUROPEAN PATENT APPLICATION

(11) **EP 0 911 246 A2**
(43) Date of publication of application: **28.04.1999**
(21) Application number: 98308642.2
(22) Date of filing: 22.10.1998
(51) Int. Cl.: B62D 13/00

(54) **Trailer steering system**

(30) Priority: 24.10.1997 GB 9722386
(71) Applicant: Meritor Heavy Vehicle Systems Limited, Llay, Wrexham, Clwyd LL12 0PB (GB)
(72) Inventor: Dixon, Alan Geoffrey, Doddleston, Chester CH4 9NU (GB)
(74) Representative: Stonehouse, Sidney William

(57) **Abstract**

A trailer steering system comprises fluid controlled articulation means (1) for steering wheels (2,3) of a trailer, sensor means (4) which is operatively applied for use at the interconnection between a king pin of a trailer and a fifth wheel of a tractor to sense relative turning movement between the king pin and trailer, and an electronic control unit (5) responsive to the sensor means operation of the articulation means according to the relative turning between the king pin and fifth wheel so as to steer the wheels of the tractor accordingly. The articulation means (1) may be pneumatically powered for turning the trailer wheels through devised angles of turn, and hydraulically powered to position the wheels precisely and hold item at desired angles when they have been turned under the pneumatic power. Preferably the sensor means (4) in the form of a transducer, responds to the position of the entry gap for the king pin in the fifth wheel. Speed sensors (32) may be provided at wheel ends of a steered wheel axle (10) whereby the control unit modulates control of the fluid supply to the articulation means according to the speed of travel of the trailer.

## Description

This invention relates to a trailer steering system, particularly, though not exclusively, for a trailer of an articulated vehicle.

Commonly the rear wheels of a trailer of an articulated vehicle are fixed parallel to the longitudinal axis of the trailer. A problem with this arrangement is that manoeuvrability of the trailer is restricted and made difficult because the wheels do not follow the are described by the tractor when it travels along a curved path. In addition, the wheels are subjected to transverse drag which adds to fuel consumption of the tractor and causes wear and scrubbing of the tyres on the wheels.

As an alternative, steering systems have been developed whereby the trailer wheels are better able to follow curved paths travelled by the tractor. Steering systems have been proposed which relate the steering of the wheels to relative turning movement between the trailer and a fifth wheel on the tractor to which the trailer is pivotally attached. However, known steering systems have involved cumbersome mechanical and hydraulic equipment at the front end of the trailer which has added substantially to the manufacturing costs of the trailer.

It is an aim of the present invention to provide an improved trailer steering system.

According to a first aspect of the present invention a trailer steering system is provided which comprises fluid controlled articulation means adapted to be connected to wheels of a trailer for steering the wheels, sensor means adapted to be operatively applied at the interconnection between a king pin of the trailer and a fifth wheel of a tractor to sense relative turning movement between the king pin and the trailer, and an electronic control unit which is responsive to the sensor means and controls operation of the articulation means in accordance with the extent of relative turning between the king pin and fifth wheel to steer the wheels of the trailer accordingly.

According to a second aspect of the present invention a trailer is provided which comprises a body, wheels mounted towards the rear of the body for angular orientation relative to the body, a king pin mounted at the front of the body for interconnection with a fifth wheel of a tractor, and a trailer steering system in accordance with the foregoing first aspect of the present invention of which the fluid controlled articulation means is connected to the wheels, the sensor means is provided in association with the king pin and the electronic control unit is mounted on the body.

Preferably the fluid controlled articulation means is, or is primarily, pneumatically powered. An air spring or springs may act on a crank of at least one of a pair of wheels in a king-pin steering arrangement. Hydraulic power may alternatively be provided for the articulation means. Preferably hydraulic means is used to position the wheels precisely and hold them at desired angles of turn when the wheels have been turned through the required angle under pneumatic power. In a trapezium configuration for Ackermann steering, for example, in which the pneumatic power acts on a crank of at least one of a pair of wheels, the hydraulic means may be provided at a track rod to set the turned angles of the wheels. The arrangement avoids hunting in the steering of the wheels from the pneumatic control.

The articulation means is preferably designed to provide self centering of the wheels in the event of failure of the fluid control.

The sensor means may comprise a part or parts carried by the king pin of the trailer and/or by a rubbing plate associated with the king pin with which the fifth wheel of a tractor engages. Preferably the sensor means responds to the position of the entry gap in the fifth wheel by way of which the king pin is received into the fifth wheel. The sensor means may comprise a transducer which may, for example, respond to magnetic, light or mechanical stimulation for signals to be passed to the electronic control unit. The transducer may be solid state so as to avoid moving parts which may be prone to wear and damage in use. For example, the transducer may comprise an electromagnetic device which for use is fixed relative to a trailer king pin and responds to the magnetic anomaly presented by the relative angular positions of the king pin and the entry gap in a fifth wheel with which the king pin is engaged. The electromagnetic device sends a signal to the electronic control unit which is thus a function of the relative angular positions of the tractor and trailer. The electromagnetic device may be embedded in the king pin.

The electronic control unit responds to information received from the sensor means to control the fluid power to the articulation means as necessary to steer the wheels of the trailer according to the relative turning detected by the sensor means. The control unit opens and closes valves in the fluid supply as necessary. Sensors connected to the control unit respond to the angular turning of the wheels for the control of the fluid supply for steering the wheels as determined by the control unit. Speed sensors may be included in the wheel ends of the steered axle whereby the control unit is able to modulate the control of the fluid supply according to the speed of travel of the trailer. There may be modulation in response to speeds of up to 40 - 50 kph, for example. Above such speeds the control unit may operate to restrict or suspend steering.

In a fluid control in which pneumatic power and hydraulic means is provided, as described above, the control unit is preferably arranged to control the pneumatic power to steer the wheels and then to cause operation of the hydraulic means to set the wheels at a required turning angle, the air pressure being stabilised when the hydraulic means has been set. The control unit may allow a small range of variation in the relative angular positions of the king pin and the fifth wheel before it causes the pneumatic power to cut in to steer the wheels further and then operate the hydraulic means to set the wheels again.

For manoeuvring or parking of the trailer in tight spaces the control unit may be arranged to change the steering of the wheels so as to turn the wheels angularly in the same direction as those of the steered wheels of the tractor to which the trailer is attached, instead of in the opposite direction. Thus the trailer may be moved crabwise.

Electrical power for the trailer steering system now provided may be taken from a 24 volt battery supply on the trailer or on the tractor to which the trailer is attached. Air for pneumatic powering of the articulation means may be taken from an air compressor supply of the tractor. Hydraulic supply for the fluid controlled articulation means may be taken from an independent supply on the trailer.

The trailer steering system according to the first aspect of the invention may be applied to a trailer having one or more sets of steerable wheels. It enables low power steering of the wheels, and free rolling of the wheels. There is particular advantage to be gained from use of the system on trailers for urban use and for carrying supplies for super markets and on articulated milk tankers, all of which require good manoeuvrability.

The system avoids cumbersome hydraulic equipment at the front end of a or the trailer, and also high torques at the front end of the trailer when it is being towed. It may be kept compact and may be installed in a trailer relatively easily and cheaply. If hydraulic means is used to control the set of the wheels at turned angles, just one hydraulic cylinder may be sufficient, although two pairs of co-operating chambers are desirable for safety.

An embodiment of the present invention will now be described by way of example only with reference to the accompanying drawings, in which :
**Figure 1** is a schematic layout of a trailer steering system in accordance with the invention;
**Figure 2** is a simplified plan view of wheels of a trailer steered by the system, and
**Figure 3** is an exploded perspective view of a king pin and pressure pad of the trailer.

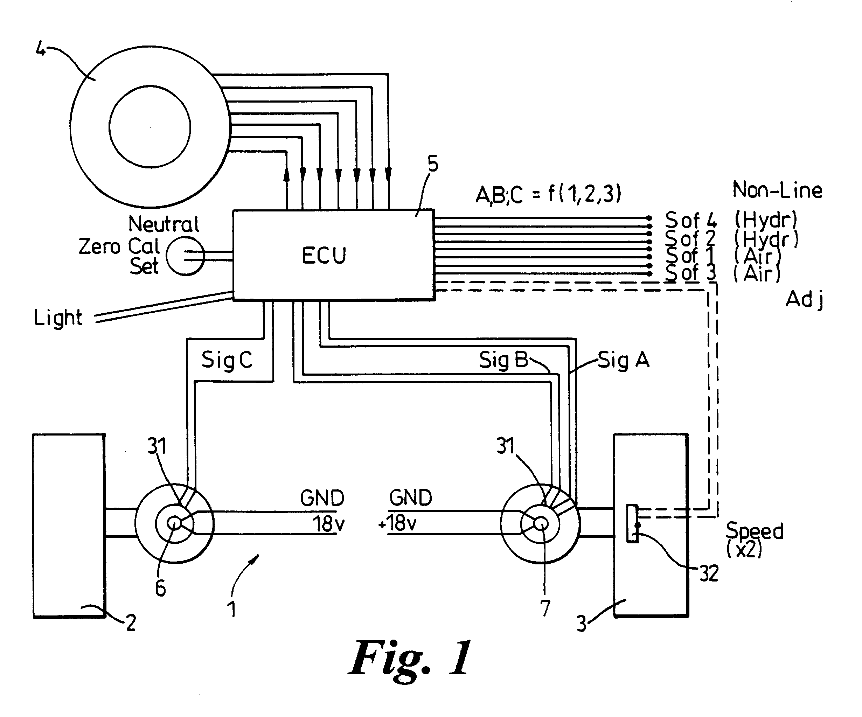

Referring to Figure 1, a trailer steering system is shown which comprises fluid controlled articulation means 1 connected to a pair of wheels 2, 3 of a trailer to be steered, sensor means 4 and an electronic control unit 5.

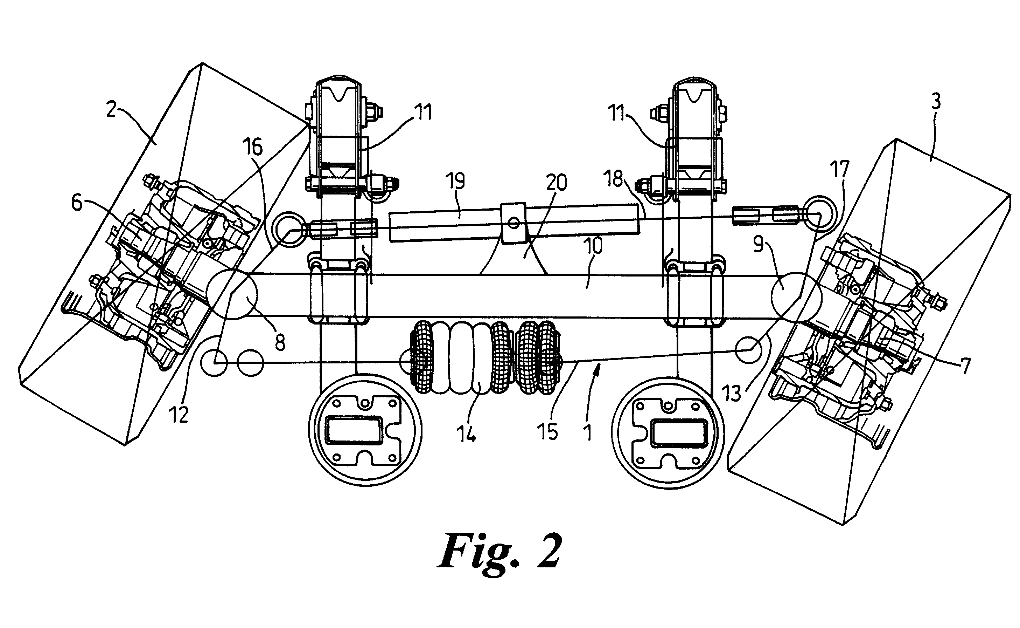

The articulation means 1 in this embodiment, as shown in Figure 2, is a king pin steering arrangement for Ackermann steering. Stub axles 6, 7 carrying the wheels 2, 3 are mounted to pivot about respective, first and second, king pins 8, 9 supported with respect to a chassis of the body of a trailer, not shown, by an axle beam 10 connected to the chassis by a suitable suspension system 11. Each stub axle 6, 7 has a trailing crank 12, 13 secured to turn with it about the respective king pin 8, 9. Two convoluted air springs 14 operate in a cage forming part of a rigid rear track rod 15 supported by and rearwardly of the axle beam 10 and pivotally attached to the cranks 12, 13 for turning the stub axles 6, 7 and wheels 2, 3 about the king pins 8, 9. The springs act on opposite sides of a fixed plate, not shown, secured to the rear of the axle beam, so as to move the rear track rod longitudinally with respect to the axle beam. Air lines, not shown, connect to the air compressor supply of the tractor to which the trailer is attached to be towed and supply air to chambers of the air springs 14. The differential lengths of the air springs 14 when operated to turn the wheels has the effect of inherently self-centering the rear track rod 15 to straighten the path of the wheels when power is removed. Also secured for turning with each stub axle 6,7 is a forwardly extending track arm 16, 17. A front track rod 18 is pivotally connected at its ends to the track arms 16, 17 in front of the axle beam 10 to complete the trapezium configuration for the Ackerman steering of the wheels. A four pot hydraulic cylinder 19 is connected into the front track rod 18 and movably attached by a bracket 20 to the axle beam.

The pneumatic actuation of the articulation means provides sufficient power for steering of the wheels which are rolling (i.e. not locked). The arrangement has the wheels steered by pneumatic power through the air springs 14, and precise positional control of the wheels is provided hydraulically by the hydraulic cylinder at the track rod, thereby avoiding overshoot and hunting in the steering from the pneumatic actuation.

The positions of the air springs and the hydraulic cylinder may be transposed, and indeed it is possible to have the pneumatically controlled track rod and one of a pair of air springs running in parallel.

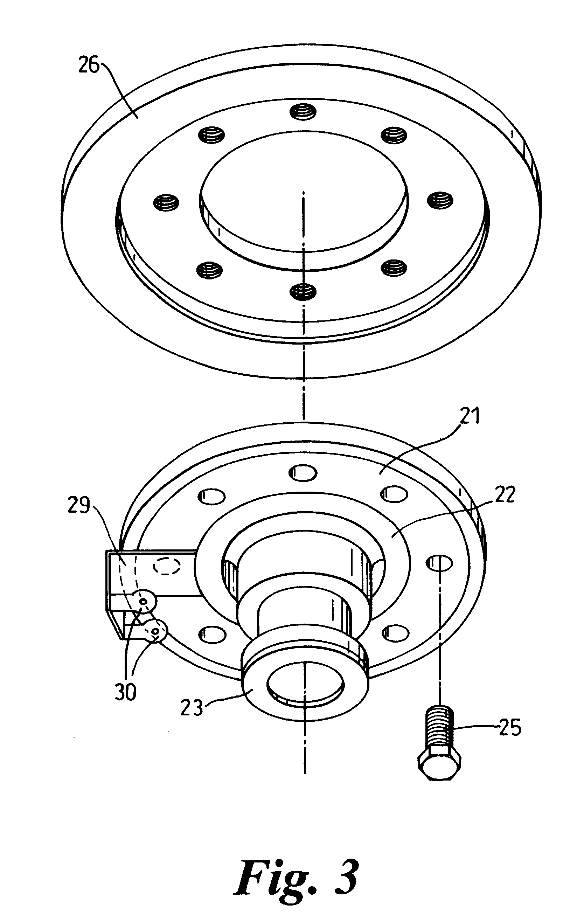

Sensor means 4 is an electronic transducer. As shown in Figure 3, this transducer comprises a pair of co-operating co-axial, first and second, rings 21, 22 which are associated with a king pin 23 fixed to the underside of the chassis of the body of the trailer to which the steering system is applied, at the front of the trailer. The king pin 23 is releasably engaged in the usual way with a fifth wheel, not shown, of a tractor by which the trailer is to be towed, the fifth wheel having the usual entry gap for receiving the king pin. First ring 21 carries sensors, not shown, and is embedded and fixed by bolts 25 in a rubbing plate 26 fixed to the chassis of the trailer at the base of the king pin 23.

Second ring 22 is rotatably mounted, co-axially, on the king pin 23. The second ring 22 is suitably magnetised or encoded for the sensors of the upper ring 21 to respond to it to sense relative turning movement between the king pin and the fifth wheel, and the extent of that movement. Fixed to the second ring 22 is a locating tongue 29 which engages with the fifth wheel in the entry gap as the king pin is introduced into the fifth wheel, thereby locating the second ring correctly with respect to the fifth wheel for use. Spring fingers 30 at opposite sides of the locating tongue 29 engage with opposite side edges of the entry gap to locate the tongue centrally of the gap.

There may be duplication or triplication of the sensors on the first ring 21 in order to provide 3/2 redundancy in the signal output from the transducer to the electronic control unit, thereby ensuring safe operation in the event of single sensor failure.

In an alternative arrangement the tongue 29 and finger 30 are replaced by an internal magnetic sensor mechanism which aligns itself with respect to the entry gap in the tractor-mounted fifth wheel plate, and rotates with it.

As shown diagrammatically in Figure 1, the sensors of the transducer are connected to the electronic control unit 5, which is contained in a box fixed to the chassis of the trailer. Also connected to the control unit 5 are sensors 31 at the king pins 8, 9 of the stub axles 6, 7 of the wheels 2, 3 which sense the extent of angular turning of the wheels about the king pins. A further, speed, sensor 32 at at least one of the wheels 2, 3 senses the rotational speed of the wheel.

The control unit 5 controls valves of the air supply to the air springs 14 for steering the wheels and for operation of the hydraulic cylinder 19 in the front track rod 18.

Electrical power is provided by a 24 volt battery supply carried by the trailer or taken from the tractor to which the trailer is connected to be towed.

The control unit is programmed to respond to relative turning movement between the king pin 23 and the fifth wheel of the tractor to which the trailer is attached, sensed by the sensors of the first ring 21 of the transducer, and to control operation of the air springs 14 and hydraulic cylinder 19 to steer the wheels 2, 3 of the trailer accordingly. During steering actuation by the air springs 14, the rod of the hydraulic cylinder 19 is displaced until the desired steered angle is attained and thereupon, cylinder 19 is hydraulically locked to retain that steered angle. The extent of the steered turning of the wheels is sensed by the sensors 31 at the king pins 8, 9 and the control unit 5 provides the necessary control of the pneumatic power and hydraulic means at the articulation means 1. The control unit also responds to the speed sensor or sensors to modulate control of the pneumatic power and hydraulic means according to the rotational speed of the wheels.

In response to relative turning movement between the king pin 23 and fifth wheel the control unit 5 operates the air springs 14 to steer the wheels 2, 3 as necessary for the trailer to follow the travel path of the tractor. When the wheels have been turned the required amount for a curved path of travel the hydraulic cylinder 19 is operated by the control unit to hold the wheels set at that angle and the air pressure at the air springs is stabilised. A small range of variation of the tractor from that curved path is allowed for by the control unit so that the hydraulic cylinder continues to hold the wheels at the set angle within that range. However, when there is variation beyond that range the control unit causes the air springs to be operated again to change the steering of the wheels as necessary, and then reset them by the hydraulic cylinder. That process is repeated as the path of travel of the tractor changes. The relationship between head angle of the trailer and axle steered angle as the trailer travels a curved path is non-linear and is programmed into the control unit 5, according to the trailer geometry.

In the event of failure of the steering power to the wheels they self-centre under the action of the air springs. The control unit has provision for a warning signal to be given if there is failure of the steering power.

## Claims

1. A trailer steering system comprising fluid controlled articulation means (1) adapted to be connected to wheels of a trailer for steering the wheels, and characterised in that it includes sensor means (4) adapted to be operatively applied at the interconnection between a king pin of the trailer and a fifth wheel of a tractor to sense relative turning movement between the king pin and the trailer, and an electronic control unit (5) which is responsive to the sensor means (4) and controls operation of the articulation means in accordance with the extent of relative turning between the king pin and fifth wheel to steer the wheels of the trailer accordingly.

2. A trailer steering system according to claim 1 characterised in that the fluid controlled articulation means (1) is at least primarily pneumatically powered.

3. A trailer steering system according to claim 2 characterised in that the fluid controlled articulation means (1) comprises one or more air springs (14) which act on a crank of at least one of a pair of wheels in a king pin steering arrangement.

4. A trailer steering system according to claim 1 characterised in that the fluid controlled articulation means (1) is hydraulically powered.

5. A trailer steering system according to claim 1 characterised in that the fluid controlled articulation means (1) comprises pneumatically powered means which operates for steering the wheels to which the means is connected for use, and hydraulically powered means which positions the wheels precisely and holds them at angles to which they have been turned by the pneumatically powered means.

6. A trailer steering system according to any preceding claim characterised in that the articulation means (1) provides self-centring of the wheels in the event of failure of the fluid control.

7. A trailer steering system according to any preceding claim characterised in that the sensor means (4) comprise a part or parts (21,22) which in use of the system is carried by the king pin of the trailer and/or by a rubbing plate associated with the king pin with which the fifth wheel of a tractor engages.

8. A trailer steering system according to any preceding claim characterised in that the sensor means (4) is responsive in use to the position of the entry gap in the fifth wheel of a tractor by way of which a king pin is received into the fifth wheel.

9. A trailer steering system according to any preceding claim characterised in that the sensor means (4) comprises a transducer which produces signals that are passed to the electronic control unit (5) for operation of the articulation means (1).

10. A trailer steering system according to claim 9 characterised in that the transducer comprises a pair of co-operating co-axial, first and second, rings (21,22) which in use of the system are associated with the king pin, the first ring (21) comprising sensors and being arranged to be fixed for use in a rubbing plate fixed to the trailer at the base of the king pin, and the second ring (22) being arranged to be rotatably mounted for use co-axially on the king pin and being prepared for the sensors of the first ring (21) to be responsive to the second ring (22) so as to sense relative turning movement between the king pin and the fifth wheel, and the extent of that movement.

11. A trailer steering system according to claim 10 characterised in that the second ring (22) has fixed thereto a locating tongue (29) which is arranged to engage with the fifth wheel in the entry gap thereof as the king pin is introduced into the fifth wheel, thereby to locate the second ring (22) correctly with respect to the fifth wheel for use.

12. A trailer steering system according to claim 11 characterised in that the locating tongue (29) has spring fingers (30) at opposite sides thereof arranged to engage with opposite side edges of the entry gap of the fifth wheel to locate the locating tongue centrally of the gap.

13. A trailer steering system according to claim 10 characterised in that the second ring (22) has an internal magnetic sensor mechanism which in use of the system aligns itself with respect to the entry gap of the fifth wheel.

14. A trailer steering system according to claim 9 characterised in that the transducer is solid state with no moving parts.

15. A trailer steering system according to claim 14 characterised in that the transducer comprises an electromagnetic device which responds in use to the magnetic anomaly presented by the relative angular positions of the king pin of the trailer and the entry gap in the fifth wheel of the tractor with which the king pin is engaged.

16. A trailer steering system according to any preceding claim characterised in that the electronic control unit (5) has sensors connected thereto adapted to respond to the angular turning of the wheels to which the articulation means (1) is connected for use, for control of fluid supply to the articulation means for steering the wheels as determined by the control unit (5).

17. A trailer steering system according to any preceding claim characterised in that the electronic control unit (5) has speed sensors (32) connected to it adapted to be included in the wheel ends of a steered axle, whereby the electronic control unit (5) is able to modulate the control of fluid supply to the articulation means (1) according to the speed of travel of the trailer.

18. A trailer steering system according to claim 17 characterised in that the control unit (5) is operative to restrict or suspend steering when the speed sensors (32) detect speeds in excess of a pre-determined level.

19. A trailer comprising a body, wheels (2,3) mounted towards the rear of the body for angular orientation relative to the body and a king pin (23) mounted at the front of the body for interconnection with a fifth wheel of a tractor, characterised in that it includes a trailer steering system according to any preceding claim of which the fluid controlled articulation means (4) is connected to the wheels (2,3), the sensor means (4) is provided in association with the king pin (23) and the electronic control unit (5) is mounted on the body.

20. A trailer according to claim 19 characterised in that the control unit (5) is operable to steer the wheels (2,3) such that the wheels are turned angularly in the same direction as those of the steered wheels of the tractor to which the trailer is attached for use, thereby to enable the trailer to be moved crabwise.
